# EUROPÄISCHE PATENTSCHRIFT

(11) **EP 0 888 916 B1**
(45) Veröffentlichungstag und Bekanntmachung des Hinweises auf die Patenterteilung: **16.04.2003**
(21) Anmeldenummer: 98108018.7
(22) Anmeldetag: 02.05.1998
(51) Int. Cl.: B60H 1/34

(54) **Lamellensystem für Belüftungseinrichtungen zur Regelung des Luftstroms, insbesondere für Belüftungen in Kraftfahrzeugen**
System with vanes for aeration devices for controlling the air flow, particularly for ventilation in automotive vehicles
Système avec lamelles pour dispositifs d'aération pour régler la ventilation, notamment pour l'aération de véhicules à moteur

(30) Priorität: 03.07.1997 DE 19728305
(43) Veröffentlichungstag der Anmeldung: 07.01.1999
(73) Patentinhaber: TRW Advanced Plastic Technologies GmbH & Co. KG, 95100 Selb (DE)
(72) Erfinder: Krause, Reinhard, 95615 Marktredwitz-Brand (DE); Meyer, Herbert, 95679 Waldershof (DE)
(74) Vertreter: Matschkur, Lindner Blaumeier Patent- und Rechtsanwälte

(56) Entgegenhaltungen:
- WO-A-94/00310
- DE-A- 4 327 265
- FR-A- 2 671 520
- US-A- 4 462 304
- US-A- 4 887 520

## Beschreibung

Die Erfindung betrifft ein Lamellensystem für Belüftungseinrichtungen zur Regelung des Luftstroms, insbesondere für Belüftungen in Kraftfahrzeugen, mit mehreren miteinander bewegungsgekoppelten Lamellen, die durch Betätigung eines vorzugsweise manuellen Stellelements zum Öffnen und Schließen eines Luftkanals bewegbar sind, wobei die Lamellen mit dem Stellelement über einen Zapfen, der in eine durch Betätigung des Stellelements bewegbare Führungsnut eingreift, in Wirkungsverbindung stehen.

Solche Lamellensysteme sind im Stand der Technik bekannt und finden bevorzugt in Kraftfahrzeugen im Bereich des Armaturenbretts Verwendung. Mit ihnen ist es möglich, individuell die Belüftung des Fahrzeuginneren durch Öffnen und Schließen der Lamellen zu regulieren, wobei die Lamellen zwischen einer geschlossenen ersten Endstellung und einer offenen zweiten Endstellung bewegbar sind.Die Lamellen werden ausgehend von der geschlossenen Stellung kontinuierlich bis zum Erreichen der kompletten Offenstellung aufgeschwenkt, wobei mitunter ein weiteres Verschwenken unter Änderung der Luftstromführung in die andere Richtung mitunter möglich ist. Die Verschwenkung der Lamellen ist bei bekannten Systemen derart ermöglicht, daß an einem die Lamellen bewegungskoppelnden Träger ein seitlich vorspringender Zapfen vorgesehen ist, der in eine durch das Stellelement betätigbare Führungsnut eingreift. Die Führungsnut wird mittels des Stellelements bewegt, was dazu führt, daß der Zapfen in dieser wandert und bei entsprechender Formgebung der Führungsnut der bewegungskoppelnde Träger und damit die Lamellen bewegt werden. Im Stand der Technik wird als Stellelement in der Regel ein vom Fahrer oder Beifahrer manuell betätigbares Drehrad verwendet, welches zwischen zwei Endstellungen, die die jeweiligen Lamellenendstellungen definieren, verdrehbar ist. Bei einem bekannten Lamellensystem, wie es beispielsweise in Fahrzeugen der Volkswagen-Baureihe "Passat" oder der 7-er Baureihe von BMW zum Einsatz kommt, ist am Drehrad innenseitig ein Planetenradgetriebe angeordnet, wobei das Planetenradgetriebe mit einer die Führungsnut aufweisenden, ebenfalls am Drehrad festgelegten Scheibe zusammenwirkt. Wird nun das Drehrad bewegt, so wird die Drehbewegung über eine fest am Drehrad vorgesehenen ersten Zahnkranz auf ein lagefeststehendes Zahnrad übertragen, welches wiederum mit einem Innenzahnkranz der genannten die Führungsnut aufweisenden Scheibe kämmt. Auf diese Weise wird die Drehbewegung des Drehrades auf die Führungsnut übertragen. Nachteilig ist bei diesem bekannten System augenfällig, daß zur Übertragung der Drehbewegung ein äußerst aufwendig gestaltetes Planetenradgetriebe erforderlich ist, bestehend aus den beiden Zahnkränzen des Drehrades und der Nutscheibe sowie dem koppelnden Planetenrad. Daß sich hieraus Montageschwierigkeiten ergeben, liegt auf der Hand, ferner ist die erforderliche Teilezahl beachtlich. Ein weiterer eklatanter Nachteil besteht darin, daß zum vollständigen Verschwenken der Lamellen von der geschlossenen ersten Endstellung in die offene zweite Endstellung das Drehrad mehrmals über seine vom Betätigenden angreifbare Fläche gedreht werden muß, das heißt, es ist mehrfach nachzufassen, um die vollständige Bewegung durchzuführen. Dies ist bedingt durch die quasi indirekten Kopplung mittels des Planetenradgetriebes und ist vor allem für ein Betätigen während der Fahrt nachteilig, da sich der Fahrer hierauf konzentrieren muß.

Ein derartiges System ist aus WO 94/00310 bekannt. Dort kommt ein Kulissenrad zum Einsatz, an dem eine Verzahnung vorgesehen ist. Dem Kulissenrad ist ein Bedienrad zugeordnet, welches ebenfalls eine Verzahnung aufweist. Beide Verzahnungen kämmen über ein Ritzel miteinander. Kulissenrad und Bedienrad sind auf ein und derselben Achse. Das dort beschriebene Planetengetriebe zeigt die eingangs genannten Nachteile. Der Erfindung liegt damit das Problem zugrunde, ein Lamellensystem der eingangs genannten Art anzugeben, welches in seinem Aufbau wie auch seiner Handhabbarkeit verbessert ist.

Zur Lösung dieses Problems ist bei einem Lamellensystem mit den eingangs genannten Merkmalen erfindungsgemäß vorgesehen, daß die Führungsnut an einem mittels des Stellelements bewegbaren Schwenkhebel ausgebildet ist, wobei am Stellelement eine zweite Führungsnut ausgebildet ist, in die ein am Schwenkhebel vorspringend angeordneter Zapfen eingreift, oder das als Schwenkarm oder als Schieber ausgebildete Stellelement in Verlängerung des Schwenkhebels und mit diesem fest verbunden, vorzugsweise einstückig mit diesem angeordnet ist.

Beim erfindungsgemäßen Lamellensystem kommen damit mit besonderem Vorteil kein Planetenradgetriebe zum Einsatz, vielmehr ist die Verwendung eines einfachen, die Führungsnut aufweisenden Schwenkhebels ausreichend, welcher mittels des Stellelements, wie nachfolgend noch beschrieben werden wird, bewegbar ist. Die erfindungsgemäße Form der Bewegungskopplung erfordert wesentlich weniger Teile, nämlich lediglich den Schwenkhebel, im Gegensatz zu den vielen erforderlichen und entsprechend ausgestalteten Bauteilen gemäß dem Stand der Technik. Dabei kann erfindungsgemäß am Stellelement, welches außer auf manuellem Wege natürlich auch z. B. elektrisch oder pneumatisch betätigbar sein kann, eine zweite Führungsnut ausgebildet sein, in die ein am Schwenkhebel vorspringend angeordneter Zapfen eingreift, wobei bei dieser Erfindungsausführung das Stellelement ein separates Bauteil zu dem Schwenkhebel darstellt. Als manuell zu betätigendes Stellelement kann erfindungsgemäß ein Drehrad, ein Schwenkarm oder ein Schieber verwendet werden. Dies insbesondere deshalb, als die erfindungsgemäße Ausbildung den beachtlichen Vorteil bietet, daß die Bewegungskopplung zwischen dem Stellelement und dem Schwenkhebel zu einem viel kürzeren Betätigungsweg zum Bewegen der Lamellen zwischen den beiden Endstellungen führt, als dies im Stand der Technik der Fall ist. Denn es genügt ein Verdrehen oder Veschwenken beispielsweise des als Drehrad oder als Schwenkarms ausgebildeten Stellelements um weniger als 90°, um sämtliche Lamellenstellungen durchzufahren. Das heißt, für den Betätigenden ist es möglich, mit nur einem Handgriff jedwede mögliche Lamellenposition einstellen zu können.

Alternativ zur Ausbildung des Stellelements als separaten Bauteil zum Schwenkhebel und die entsprechende Ausgestaltung mit der zweiten Führungsnut, die dazu führt, daß die Drehbewegung eine richtungsmäßig entgegengesetzte Lamellenbewegung zur Folge hat, kann gemäß einer vorteilhaften weiteren Erfindungsausgestaltung vorgesehen sein, daß das als Schwenkarm oder als Schieber ausgebildete Stellelement in Verlängerung des Schwenkhebels und mit diesem fest, vorzugsweise einstückig verbunden angeordnet ist. Denn die erfindungsgemäße Ausführung mit dem Schwenkhebel läßt eben den äußerst kurzen Betätigungsweg zu und bietet so die Möglichkeit, durch unmittelbares Angreifen am entsprechend verlängert ausgeführten Schwenkhebel die Lamellenbewegung vorzunehmen.

Vor allem auf dem Automobilsektor wird ein Lamellensystem in der Regel derart eingesetzt, daß es an einen Luftkanal angeschlossen wird, der mit an entsprechender Position angeordneten, mit der Umgebung kommunizierenden Lufteintrittsöffnungen verbunden ist, wobei zumeist auch ein Gebläse dazwischengeschaltet ist. Um für eine bessere Regulierung Sorge zu tragen, ist im Stand der Technik mitunter eine den Lamellen vorgeschaltete Luftklappe vorgesehen, die auch im Stand der Technik bei Betätigung des Stellelements simultan mit den Lamellen bewegt werden kann. Um auch beim erfindungsgemäßen Lamellensystem diese Möglichkeit zu realisieren, ist gemäß einer zweckmäßigen weiteren Erfindungsausgestaltung vorgesehen, daß der Schwenkhebel mit einer den Lamellen vorgeschalteten schwenkbaren, im Luftkanal angeordneten Luftklappe derart bewegungsgekoppelt ist, daß bei Bewegen der Lamellen aus der oder in die geschlossene Stellung die Luftklappe geöffnet oder geschlossen wird. Beim erfindungsgemäßen Lamellensystem wird vorteilhaft mittels des Schwenkhebels die Bewegungskopplung sowohl der Lamellen als auch der Luftklappe realisiert, das heißt, mit nur einem Bauteil schafft die Erfindung eine vollständige Bewegungskopplung, im Gegensatz zum Stand der Technik, bei dem eine Vielzahl von unterschiedlichen Bauteilen hierfür erforderlich sind. Dabei kann erfindungsgemäß die Bewegungkopplung derart sein, daß die Luftklappe bei Bewegen des Stellelements um eine erste Wegstrecke vollständig geöffnet wird, und bei weiterem Bewegen des Stellelements zum weiteren Bewegen der Lamellen die Luftklappe in der Offenstellung verbleibt. Diese erfindungsgemäße Form der Bewegungskopplung ermöglicht es, daß zu Beginn der Öffnungsbewegung der Lamellen mit relativ kurzem Bewegungsweg die Luftklappe bereits vollständig öffnet, so daß hinreichend Luft in den Lamellenbereich auch bei nur geringer Lamellenöffnung geführt wird. Dabei kann zur Bewegungskopplung eine am Schwenkhebel ausgebildete dritte Führungsnut vorgesehen sein, in die ein mit der Luftklappe gekoppelter Zapfen eingreift. Zur Ermöglichung der vorbeschriebenen besonderen Art der Luftklappen-Bewegungskopplung kann die Führungsnut im wesentlichen L-förmig verlaufend geführt sein und einen ersten und einen zweiten Abschnitt aufweisen, wobei der an einem Hebelarm der Luftklappe exzentrisch zur Schwenkachse angeordnete Zapfen während des Öffnungsvorgangs der Luftklappe im ersten Abschnitt und anschließend im zweiten Abschnitt geführt ist.

Als besonders zweckmäßig insbesondere im Hinblick auf eine möglichst geringe Baugröße hat es sich erwiesen, wenn der Schwenkhebel um eine im wesentlichen mittig verlaufende Schwenkachse bewegbar ist und die erste und/oder dritte Führungsnut an den jeweiligen Endbereichen des Schwenkhebels angeordnet ist. Um schließlich die Kompaktheit des Systems weiter zu erhöhen, insbesondere im Hinblick auf die Bildung eines eigenständigen kompletten Bauteils, welches in ein Armaturenbrett oder dergleichen komplett einsetzbar ist, ist im Rahmen der Erfindung ferner vorgesehen, daß die Lamellen, das Stellelement und der Schwenkhebel, gegebenenfalls auch die Luftklappe, an einem gemeinsamen, den Luftkanal bildenden Gehäuse angeordnet sind. Am Schwenkhebel selbst kann ferner eine Ausnehmung oder Durchbrechung vorgesehen sein, durch welche die Drehoder Schwenkachse des Stellelements, insbesondere die Drehachse des Drehrads, die am Gehäuse gelagert ist, hindurchgreift.

Damit der Fahrer oder der Beifahrer auch in der Dunkelheit mühelos das Stellelement finden kann, wäre es wünschenswert, wenn dieses entsprechend beleuchtbar wäre. Um dem Rechnung zu tragen, ist gemäß einer vorteilhaften weiteren Erfindungsausgestaltung vorgesehen, daß das Stellelement ganz oder teilweise (z. B. nur im Bereich eines daran vorgesehenen Symbols o. dgl.) aus transparentem Material, insbesondere aus Kunststoff gebildet ist, so daß es möglich ist, mittels einer im Bereich des Stellelements angeordneten Beleuchtungseinrichtung wie einer Kleinglühlampe Licht in das (teil-)transparente Stellelement einzukoppeln, so daß dieses an der zum Fahrzeuginnenraum zeigenden Seite leuchtet. Dabei bietet vor allem die Verwendung eines Drehrades im erfindungsgemäßen Lamellensystem einen beachtlichen Vorteil, da hier im Drehrad kein Planetenradgetriebe mehr integriert ist, sondern dieser Bereich entsprechend anderweitig genutzt werden kann. Zu diesem Zweck kann erfindungsgemäß ferner vorgesehen sein, daß das als Drehrad ausgebildete Stellelement an der dem Schwenkhebel zugewandten Seite eine zur Aufnahme einer Beleuchtungseinrichtung ausgebildete Ausnehmung aufweist, in welche die Beleuchtungseinrichtung eingreifen kann, so daß das Drehrad von innen her beleuchtbar ist. Die Aufnahmee kann dabei als im wesentlichen kreisförmige Eintiefung ausgebildet sein, in welcher lediglich die Führungsnut noch stehen bleibt, oder aber als entsprechende sich aus der Drehbewegung ergebende länglich geführte Ausnehmung oder dergleichen.

Weitere Vorteile, Merkmale und Einzelheiten der Erfindung ergeben sich aus dem im folgenden beschriebenen Ausführungbeispiel sowie anhand der Zeichnungen. Dabei zeigen:
- Fig. 1: eine perspektivische Ansicht eines erfindungsgemäßen Lamellensystems,
- Fig. 2: eine Seitenansicht des Lamellensystems aus Fig. 1 mit Blick auf den Schwenkhebel, wobei die Lamellen geschlossen sind,
- Fig. 3: eine Ansicht gemäß Fig. 2 mit einer Schwenkhebelstellung mit geöffneten Lamellen, und
- Fig. 4: eine Ansicht der Schwenkhebelstellung bei weiterem Verschwenken, wobei die Lamellen in der zweiten Endstellung sind.

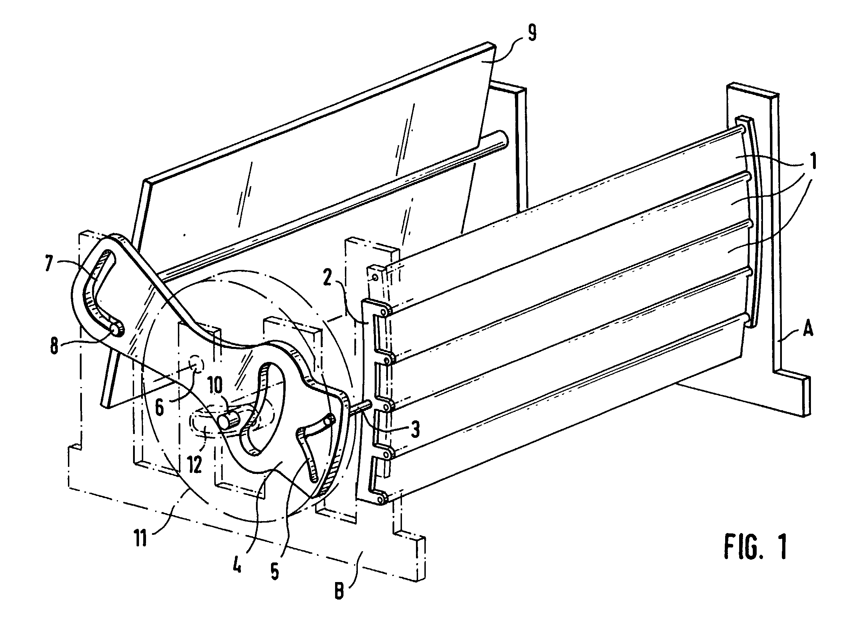

Fig. 1 zeigt in perspektivischer Ansicht das erfindungsgemäße Lamellensystem, wobei hier der Übersichtlichkeit halber kein geschlossenes, den Luftkanal bildendes Gehäuse gezeichnet ist, sondern lediglich entsprechende Haltewangen A, B für die nachfolgend noch beschriebenen Elemente. Bei Verwendung des Lamellensystems beispielsweise zur Belüftungsregulierung in Kraftfahrzeugen ist die gesamte gezeigte Mimik in beziehungsweise an einem Gehäuse, welches geschlossen ist und den Luftkanal bildet, angeordnet.

Das erfindungsgemäße Lamellensystem besteht aus mehreren Lamellen 1, die mittels eines kammartigen Trägers 2, an welchem die Lamellen angelenkt sind, miteinander bewegungsgekoppelt sind. Am Träger 2 ist ein seitlich vorspringender Zapfen 3 angeordnet. Dieser Zapfen 3 greift in eine an einem Schwenkhebel 4, welcher sich im gezeigten Beispiel seitlich der Wange B erstreckt (bei Vorhandensein eines geschlossenen Gehäuses würde der Schwenkhebel außerhalb des Gehäuses an der Wandung entlang liegen). Der Zapfen 3 greift in eine am Schwenkhebel 4 ausgebildete Führungsnut 5 ein, welche im wesentlichen V-förmig verläuft. In dieser Nut wandert der Zapfen 3, wie nachfolgend noch beschrieben wird, und ermöglicht so eine Bewegung des Trägers 2, welcher folgend sich die Lamellen entsprechend bewegen. Der Schwenkhebel 4 ist um eine starre Achse 6 verschwenkbar wiederum an der Wange B (entsprechend dem Gehäuse) gelagert. Der Schwenkhebel 4 ist über den Anlenkpunkt hinaus verlängert und weist an seinem anderen Ende eine dritte Führungsnut 7 auf, welche im wesentlichen L-förmig ist. In diese dritte Führungsnut 7 greift ein weiterer Zapfen 8 einer Luftklappe 9, die im Luftkanal angeordnet ist und zum Abschließen desselben dient (im geschlossenen Gehäuse würde diese Luftklappe in der in Fig. 1 gezeigten Stellung den gehäuseseitig gebildeten Luftkanal vollständig abdichten). Durch diese Zapfen-Nutverbindung 7, 8 wird auch die Luftklappe 9 mit dem Schwenkhebel 4 bewegungsgekoppelt. Am Schwenkhebel 4 ist ein weiterer Zapfen 10 ausgebildet, welcher seitlich vorspringt. Dieser Zapfen 10 greift in eine an einem Stellelement in Form eines Drehrades 11 ausgebildete zweite Führungsnut 12 ein. Das Drehrad 11 ist das vom Bediener zu betätigende Handhabungselement, über welches die Lamellen- und die Luftklappenstellung geändert beziehungsweise eingestellt werden kann. Ersichtlich ist infolge der unterschiedlichen Zapfen-Nut-Verbindungen eine vollständige Bewegungskopplung zwischen dem Drehrad 11, dem Schwenkhebel 4 und den Lamellen 1 beziehungsweise der Luftklappe 9 realisiert.

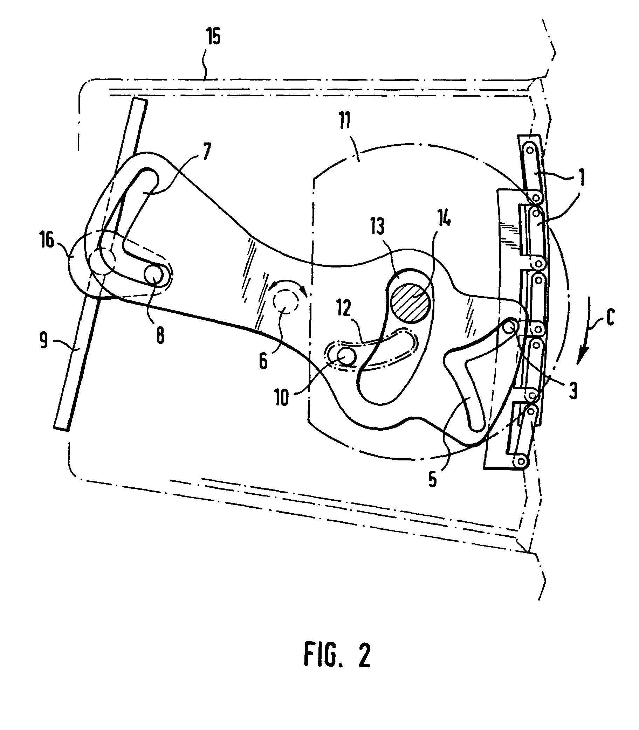

Die Fig. 2 bis 4 zeigen nun die Funktionsweise des erfindungsgemäßen Lamellensystems und die Bewegungskopplungen im Detail. Dabei ist in Fig. 2 die Stellung des Schwenkhebels und des Drehrades sowie der jeweils zu bewegenden Komponenten wiedergegeben, die der geschlossenen Stellung der Lamellen entsprechen. Der Übersichtlichkeit halber ist das Drehrad 11 einseitig geschnitten, um die Drehbewegung und die Änderung der Radstellung besser wiedergeben zu können. In der in Fig. 2 gezeigten Ausgangsstellung befindet sich der Zapfen 3 in der oberen Endstellung der Führungsnut 5. Der Zapfen 8 befindet sich in der rechten Endstellung der Führungsnut 7, und der Zapfen 10 ist schließlich im linken Endbereich der zweiten Führungsnut 12 angeordnet. Wie Fig. 2 zeigt, ist am Schwenkhebel 4 eine weitere Durchbrechnung 13 ausgebildet, durch welche die Drehachse 14 des Drehrades 11 hindurchgreift.

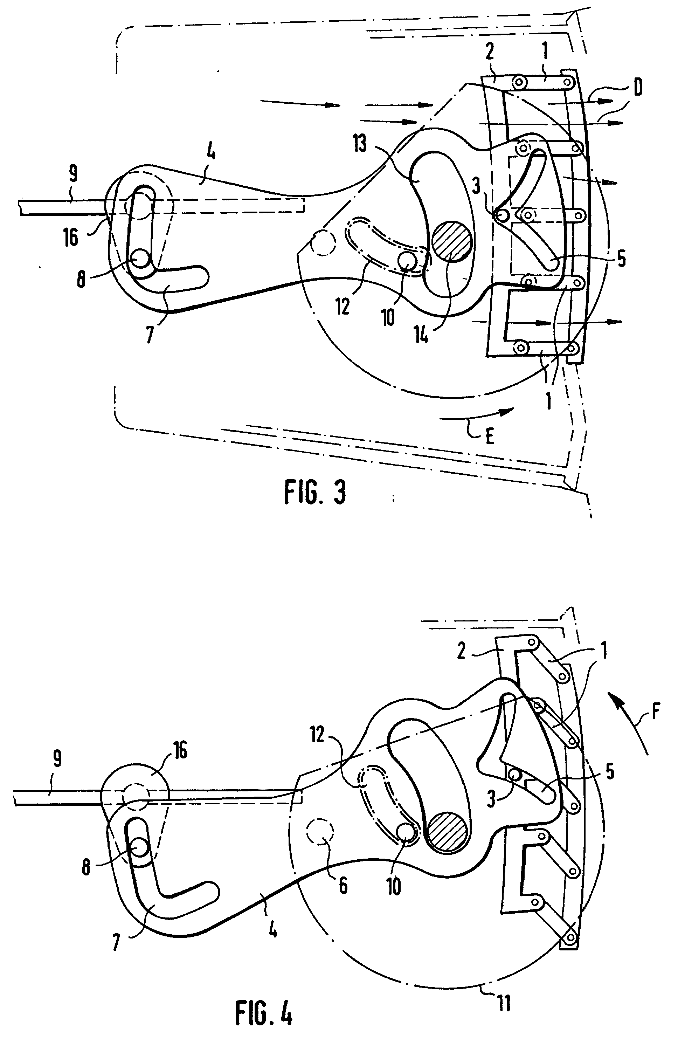

Soll nun zu Belüftungszwecken der Luftkanal, der in dem hier strichpunktiert dargestellten Gehäuse 15 ausgebildet ist, geöffnet werden, so ist das Drehrad 11 in Richtung des Pfeils C zu verschwenken. Diese Verschwenkung führt nun dazu, daß der Zapfen 10 in der Führungsnut 12 des Drehrades 11 geführt und nach oben mitgenommen wird, was zur Folge hat, daß der Schwenkhebel 4 um seine Drehachse 6 entgegen dem Uhrzeigersinn verschwenkt wird. Diese Verschwenkung führt dazu, daß gleichzeitig auch der Zapfen 3 in der ersten Führungsnut 5 mitgenommen und in die Nutmulde der V-förmigen Führungsnut geführt wird. Diese Führung bewirkt, daß der Träger 2 längs einer kreissegmentförmigen Bahn bewegt wird und von der lamellennahen Lage in eine in Fig. 3 gezeigte entfernte Lage gebracht wird, wobei die Lamellen 1 mitgenommen werden und den Luftkanal öffnen. Das Verschwenken des Schwenkhebels 4 entgegen dem Uhrzeigersinn bewirkt ferner, daß auch der Zapfen 8, der an einem Schwenkarm 16 der Luftklappe 9 exzentrisch zu deren Schwenkachse angeordnet ist, in der dritten Führungsnut in dem im wesentlichen horizontal verlaufenden Nutabschnitt geführt wird. Dabei ist die Nut derart ausgebildet, daß bereits ein geringes Bewegen des Schwenkhebels 4 und damit des Drehrades 11 zu einem vollständigen Öffnen der Luftklappe 9 führt. Ersichtlich laufen sämtliche Bewegungsvorgänge synchron miteinander ab, bedingt durch die Kopplung sämtlicher Elemente ausschließlich am Schwenkhebel 4. Dabei bedarf es für die gezeigte Verschwenkung der Lamellen 1 und der Luftklappe 9 nur einer sehr geringen Drehradbewegung, wie die Stellung der abgeschnittenen Seite des Drehrades 11 zeigt. Die hierfür erforderliche Verschwenkung, die ein vollständiges Öffnen insbesondere der Lamellen 1 und damit einen Luftdurchtritt (Pfeile D) ermöglicht, beträgt nur unwesentlich mehr als 45°. Soll nun der Luftkanal wieder geschlossen werden, so wäre das Drehrad 11 in entgegengesetzter Richtung (Pfeil E) zurückzudrehen, die Bewegungen würden dann in umgekehrter Weise ablaufen.

Fig. 4 zeigt nun die Stellung des Schwenkhebels, wenn dieser noch weiter in Richtung des Pfeils C gedreht wird. Ausgehend von der in Fig. 3 gezeigten Stellung wird das Drehrad 11, vergleiche die Stellung der abgeschnittenen Seite des Drehrades, noch weiter verschwenkt, was dazu führt, daß der Zapfen 10 noch weiter in der Führungsnut 12 bis an deren Ende geführt wird. Bedingt durch die Ausbildung der Führungsnut 12 bewirkt diese vergleichsweise kurze nutseitige Führung eine beachtliche weitere Hebelverschwenkung, wie anhand der Schwenkhebelstellung sowie der Lamellenstellung ersichtlich ist. Dieses weitere Verschwenken bewirkt, daß der Zapfen 3 in der Führungsnut 5 im anderen V-Schenkel geführt wird und dadurch der Träger 2 noch weiter nach oben geschwenkt wird. Die Stellung der Lamellen bewirkt, daß dann der hindurchtretende Luftstrom quasi nach unten abgelenkt wird, im Gegensatz zur entgegengesetzten Stellung der Lamellen, wie sie bei Bewegen zwischen den Stellungen der Fig. 2 und 3 erreicht wird. Auf diese Weise läßt sich problemlos eine Feineinstellung des Luftstromes erzielen. Im Gegensatz zu den Lamellen verbleibt die Luftklappe 9 während dieser weiteren Verschwenkbewegung völlig unbetätigt. Dies wird dadurch erreicht, daß der Zapfen 8 nunmehr in dem im wesentlichen vertikalen Schenkel der dritten Führungsnut 7 geführt ist und infolgedessen nicht bewegt wird. Der Luftkanal bleibt also in jedem Fall voll geöffnet. Soll nun wieder geschlossen werden, ist das Drehrad 11 gemäß Pfeil F wieder zurückzudrehen. Wie ein Vergleich der in den Fig. 2 und 4 gezeigten Drehradstellungen zeigt, ist das Drehrad 11 um weniger als 90° zu verdrehen, um die Lamellen 1 zwischen den beiden möglichen Endstellungen zu bewegen.

Wie anhand des beschriebenen Ausführungsbeispiels ersichtlich ist, ist auch eine Verwendung eines anderen Stellelements als einem Drehrad möglich. Beispielsweise kann das Stellelement auch als um eine der Drehachse 14 entsprechende Schwenkachse verschwenkbarer, mit einer der Führungsnut 12 entsprechenden Führungsnut versehener Schwenkhebel ausgebildet sein, der einen von außen betätigbaren Angriffsabschnitt aufweist. Alternativ hierzu bietet sich auch die Möglichkeit, auf ein bezüglich des Schwenkhebels separates Stellelement zu verzichten und dieses in unmittelbarer Verlängerung des Schwenkhebels über die Ebene der Lamellen hinaus anzubringen. Bei dieser Ausführungsform würde dann die Lamellenöffnung durch eine Stellelementenbetätigung in umgekehrter Richtung erfolgen, da in diesem Fall keine Bewegungskopplung wie sie der Zapfen 10 und die Führungsnut 12 darstellen gegeben wäre, welche bewirkt, daß der Öffnungsvorgang der Lamellen durch Bewegen des Stellelements von oben nach unten erfolgt. Bei direkter Anordnung des Stellelements am Schwenkhebel würde das Öffnen in umgekehrter Weise durch ein Bewegen von unten nach oben möglich sein.

Das Drehrad 11 im gezeigten Ausführungsbeispiel ist an seiner dem Schwenkhebel 4 zugewandten Seite mit einer entsprechenden, nicht näher gezeigten Ausnehmung versehen, in welche ein Beleuchtungselement in Form einer Lampe oder dergleichen eingesetzt werden kann. Diese ermöglicht die Innenbeleuchtung des bevorzugt aus transparentem Kunststoff gefertigten Drehrades 11. Eine derartige Ausgestaltung ist möglich, da bedingt durch die erfindungsgemäße Ausführung des Lamellensystems keine drehradseitigen Elemente - abgesehen von der Führungsnut 12 - erforderlich sind und infolgedessen Raum für die Beleuchtungsaufnahme vorhanden ist.

## Patentansprüche

1. Lamellensystem für Belüftungseinrichtungen zur Regelung des Luftstroms, insbesondere für Belüftungen in Kraftfahrzeugen, mit mehreren miteinander bewegungsgekoppelten Lamellen (1), die durch Betätigung eines vorzugsweise manuellen Stellelements (11) zum Öffnen und Schließen eines Luftkanals bewegbar sind, wobei die Lamellen (1) mit dem Stellelement (11) über einen Zapfen (3), der in eine durch Betätigung des Stellelements (11) bewegbare Führungsnut (5) eingreift, in Wirkungsverbindung stehen, **dadurch gekennzeichnet, daß** die Führungsnut (5) an einem mittels des Stellelements (11) bewegbaren Schwenkhebel (4) ausgebildet ist, wobei am Stellelement (11) eine zweite Führungsnut (12) ausgebildet ist, in die ein am Schwenkhebel (4) vorspringend angeordneter Zapfen (10) eingreift, oder das als Schwenkarm oder als Schieber ausgebildete Stellelement in Verlängerung des Schwenkhebels und mit diesem fest verbunden, vorzugsweise einstückig mit diesem angeordnet ist.

2. Lamellensystem nach Anspruch 1, **dadurch gekennzeichnet, daß** das manuell zu betätigende Stellelement ein Drehrad (11), ein Schwenkarm oder ein Schieber ist.

3. Lamellensystem nach einem der vorangehenden Ansprüche, **dadurch gekennzeichnet, daß** der Schwenkhebel (4) mit einer den Lamellen (1) vorgeschalteten schwenkbaren, im Luftkanal angeordneten Luftklappe (9) derart bewegungsgekoppelt ist, daß bei Bewegen der Lamellen (1) aus der oder in die geschlossene Stellung die Luftklappe (9) geöffnet oder geschlossen wird.

4. Lamellensystem nach Anspruch 3, **dadurch gekennzeichnet, daß** die Bewegungskopplung derart ist, daß die Luftklappe (9) bei Bewegen des Stellelements (11) um eine erste Wegstrecke vollständig geöffnet wird und bei weiterem Bewegen des Stellelements (11) zum weiteren Bewegen der Lamellen (1) die Luftklappe (9) in der Offenstellung verbleibt.

5. Lamellensystem nach Anspruch 3 oder 4, **dadurch gekennzeichnet, daß** am Schwenkhebel (4) eine dritte Führungsnut (7) ausgebildet ist, in die ein mit der Luftklappe (9) gekoppelter Zapfen (8) eingreift.

6. Lamellensystem nach Anspruch 4 und 5, **dadurch gekennzeichnet, daß** die Führungsnut (7) im wesentlichen L-förmig verläuft und einen ersten und einen zweiten Abschnitt aufweist, wobei der an einem Hebelarm (16) der Luftklappe (9) exzentrisch zur deren Schwenkachse angeordnete Zapfen (8) während des Öffnungsvorgangs der Luftklappe (9) im ersten Abschnitt und anschließend im zweiten Abschnitt geführt ist.

7. Lamellensystem nach den Ansprüchen 5 und 6, **dadurch gekennzeichnet, daß** der Schwenkhebel (4) um eine im wesentlichen mittig verlaufende Schwenkachse (6) bewegbar ist und die erste und dritte Führungsnut (5, 7) an den jeweiligen Endbereichen des Schwenkhebels (4) angeordnet ist.

8. Lamellensystem nach Anspruch 4 oder 5, **dadurch gekennzeichnet, daß** der Schwenkhebel (4) um eine im wesentlichen mittig verlaufende Schwenkachse (6) bewegbar ist und die erste oder dritte Führungsnut (5, 7) an den jeweiligen Endbereichen des Schwenkhebels (4) angeordnet ist.

9. Lamellensystem nach einem der vorangehenden Ansprüche, **dadurch gekennzeichnet, daß** die Lamellen (1), das Stellelement (11) und der Schwenkhebel (4) an einem gemeinsamen, den Luftkanal bildenden Gehäuse (15) angeordnet sind.

10. Lamellensystem nach Anspruch 3 und 9, **dadurch gekennzeichnet, daß** auch die Luftklappe (9) an einem gemeinsamen, den Luftkanal bildenden Gehäuse (15) angeordnet ist.

11. Lamellensystem nach Anspruch 8, **dadurch gekennzeichnet, daß** am Schwenkhebel (4) eine Ausnehmung oder Durchbrechung (13) vorgesehen ist, durch welche die Dreh- oder Schwenkachse des Stellelements, insbesondere die Drehachse (14) des Drehrades (11), die am Gehäuse (15) gelagert ist, hindurchgreift.

12. Lamellensystem nach einem der vorangehenden Ansprüche, **dadurch gekennzeichnet, daß** das Stellelement (11) ganz oder teilweise aus transparentem Material, insbesondere aus Kunststoff gebildet ist.

13. Lamellensystem nach Anspruch 12, **dadurch gekennzeichnet, daß** das als Drehrad (11) ausgebildete Stellelement an der dem Schwenkhebel (4) zugewandten Seite eine zur Aufnahme einer Beleuchtungseinrichtung ausgebildete Ausnehmung aufweist.

## Claims

1. Vane system for ventilation devices for controlling the air flow, in particular for ventilation systems in motor vehicles, having a of plurality vanes (1) movably coupled together, which are movable in order to actuate a preferably manual adjuster (11) for opening and closing an air duct, the vanes (1) being actively connected to the adjuster (11) via a pin (3), which engages in a guide groove (5) movable by actuation of the adjuster (11), **characterised in that** the guide groove (5) is formed on a pivot lever (4) movable by means of the adjuster (11), a second guide groove (12) being formed on the adjuster (11), into which groove a pin (10) disposed projectingly on the pivot lever (4) engages, or the adjuster formed as a pivot arm or slide is rigidly connected to the pivot lever as an extension thereof, and is preferably formed integrally therewith.

2. Vane system according to claim 1, **characterised in that** the adjuster to be actuated manually is a rotary wheel (11), a pivot arm or a slide.

3. Vane system according to one of the preceding claims, **characterised in that** the pivot lever (4) is movably coupled to an air damper (9) connected pivotably upstream of the vanes (1) and disposed in the air duct in such a manner that when the vanes (1) are being moved out of or into the closed position, the air damper (9) is opened or closed.

4. Vane system according to claim 3, **characterised in that** the moving coupling is such that the air damper (9) is fully open by a first distance during movement of the adjuster (11) and upon further movement of the adjuster (11) for further movement of the vanes (1) the air damper (9) remains in the open position.

5. Vane system according to claim 3 or 4, **characterised in that** on the pivot lever (4) a third guide groove (7) is formed, into which a pin (8) coupled to the air damper (9) engages.

6. Vane system according to claims 4 and 5, **characterised in that** the guide groove (7) extends substantially in an L-shaped manner and has a first and second section, wherein the pin (8) disposed on the lever arm (16) of the air damper (9) eccentric to its pivotal axis is guided during opening of the air damper (9) in the first section and then in the second section.

7. Vane system according to claims 5 and 6, **characterised in that** the pivot lever (4) is movable about a pivotal axis (6) which extends substantially centrally, and the first and third guide grooves (5, 7) are disposed at the respective end regions of the pivot lever (4).

8. Vane system according to claim 4 or 5, **characterised in that** the pivot lever (4) is movable about a pivotal axis (6) which extends substantially centrally and the first or third guide groove (5, 7) is disposed at the respective end region of the pivot lever (4).

9. Vane system according to one of the preceding claims, **characterised in that** the vanes (1), the adjuster (11) and the pivot lever (4) are formed on a common housing (15) forming the air duct.

10. Vane system according to claims 3 and 9, **characterised in that** the air damper (9) is also formed on a common housing (15) forming the air duct.

11. Vane system according to claim 8, **characterised in that** on the pivot lever (4) a recess or breach (13) is provided, through which the pivotal axis or rotary shaft of the adjuster, in particular the rotary shaft (14) of the rotary wheel (11) mounted on the housing (15) projects.

12. Vane system according to one of the preceding claims, **characterised in that** the adjuster (11) is wholly or partly formed of transparent material, in particular plastics material.

13. Vane system according to claim 12, **characterised in that** the adjuster formed as a rotary wheel (11) has on the side associated with the pivot lever (4) a recess for receiving a lighting device.

## Revendications

1. Système à lamelles pour dispositif d'aération destiné à régler la ventilation notamment l'aération de véhicules à moteur, du type comportant plusieurs lamelles (1) accouplées les unes avec les autres en déplacement et qui sont déplaçables par actionnement d'un élément de réglage (11), de préférence manuellement, pour l'ouverture et la fermeture d'un canal d'amenée d'air, les lamelles étant en liaison fonctionnelle avec l'élément de réglage (11) par l'intermédiaire d'une cheville (3) qui engrène avec une rainure de guidage mobile (5) lors de l'actionnement de l'élément de réglage (11), **caractérisé en ce que** la rainure de guidage (5) est pratiquée dans un levier basculant (4) monté mobile au milieu de l'élément de réglage (11), dans l'élément de réglage (11) étant pratiquée une seconde rainure de guidage (12), dans laquelle engrène une cheville (10) montée en relief sur le levier basculant (4), ou bien l'élément de réglage jouant le rôle de bras basculant ou de coulisse est agencé dans le prolongement du levier basculant et solidaire de celui-ci, de préférence en une seule pièce avec lui.

2. Système à lamelles selon la revendication 1, **caractérisé en ce que** l'élément de réglage destiné à être actionné à la main est une roue rotative (11), un bras basculant ou une coulisse.

3. Système à lamelles selon l'une quelconque des revendications précédentes, **caractérisé en ce que** le levier basculant (4) est accouplé en déplacement avec un clapet d'aération (9) pré-réglé, basculable dans le canal d'aération d'une manière telle que, lors du déplacement des lamelles (1), hors ou vers la position fermée, le clapet d'aération (9) devient ouvert ou fermé.

4. Système à lamelles selon la revendication 3, **caractérisé en ce que** le couplage en déplacement est tel que le clapet d'aération (9), lors d'un déplacement de l'élément de réglage (11), devient complètement ouvert au cours d'une première course et, lors de la poursuite du déplacement de l'élément de réglage (11), en vue de la poursuite du déplacement des lamelles (1), le clapet d'aération (9) demeure dans la position ouverte.

5. Système à lamelles selon la revendication 3 ou 4, **caractérisé en ce que** sur le levier basculant (4) est pratiquée une troisième rainure de guidage dans lequel engrène une cheville (8) couplée avec le clapet d'aération (9).

6. Système à lamelles selon la revendications 4 et 5, **caractérisé en ce que** la rainure de guidage (7) a une forme générale en L et présente une première et une seconde section, la cheville (18) étant montée sur un bras de levier (16) du clapet d'aération (9) excentriquement par rapport à l'axe de basculement de celui-ci tandis que le trajet d'ouverture du clapet d'aération (9) est guidé dans la première section et ensuite dans la seconde section.

7. Système à lamelles selon la revendication 5, **caractérisé en ce que** le levier basculant (4) est mobile autour d'un axe de basculement (6) s'étendant à peu près en son milieu et la première et la troisième rainures de guidage (5, 7) sont pratiquées dans les zones d'extrémité du levier basculant (4).

8. Système à lamelles selon la revendication 4 ou 5, **caractérisé en ce que** le levier basculant (4) est mobile autour d'un axe de basculement (6) s'étendant pratiquement en son milieu et la première ou la troisième rainures de guidage (5, 7) sont pratiquées dans les zones d'extrémités du levier basculant (4).

9. Système à lamelles selon l'une quelconque des revendications précédentes, **caractérisé en ce que** les lamelles (1), l'élément de réglage (11) et le levier basculant (4) sont montés dans un boîtier commun (15) constituant le canal d'aération.

10. Système à lamelles selon les revendications 3 et 9, **caractérisé en ce que** le clapet d'aération (9) est également logé dans le boîtier (15) constituant le canal d'aération.

11. Système à lamelles selon la revendication 8, **caractérisé en ce que** sur le levier basculant (4) est prévu un évidemment ou une entaille (13) à travers laquelle engrène l'axe de rotation ou de basculement de l'élément de réglage, en particulier l'axe de rotation (14) de la roue rotative (11) qui est logée dans le boîtier (15).

12. Système à lamelles selon l'une quelconque des revendications précédentes, **caractérisé en ce que** l'élément de réglage (11) est en totalité ou en partie réalisé en matériau transparent en particulier en matière plastique.

13. Système à lamelles selon la revendication 12, **caractérisé en ce que** l'élément de réglage constitué sous forme d'une roue rotative (11) présente , sur le côté faisant face au levier de basculement (4) un évidement pratiqué en vue de recevoir un dispositif d'éclairage.
